# EUROPÄISCHE PATENTSCHRIFT

(11) **EP 2 069 623 B1**
(45) Veröffentlichungstag und Bekanntmachung des Hinweises auf die Patenterteilung: **06.11.2013**
(21) Anmeldenummer: 07818437.1
(22) Anmeldetag: 26.09.2007
(51) Int. Cl.: F02C 1/04, F02C 1/10, F02G 1/043

(54) **VORRICHTUNG ZUR GEWINNUNG VON ELEKTRISCHER ENERGIE AUS NIEDERTEMPERATURWÄRME ODER ABWÄRME**
APPARATUS FOR OBTAINING ELECTRICAL ENERGY FROM LOW-TEMPERATURE HEAT OR EXHAUST HEAT
DISPOSITIF POUR OBTENIR DE L'ENERGIE ELECTRIQUE À PARTIR DE CHALEUR À BASSE TEMPERATURE OU DE CHALEUR DISSIPEE

(30) Priorität: 29.09.2006 DE 102006046874
(43) Veröffentlichungstag der Anmeldung: 17.06.2009
(73) Patentinhaber: Tdc Trade, Development&construction Ltd., 06773 Gräfenhainichen (DE)
(72) Erfinder: BAIER, Ralf, 06785 Oranienbaum (DE); VOLK, Michael, 04319 Leipzig (DE)
(74) Vertreter: Fischer, Volker
(86) Internationale Anmeldenummer: PCT/EP2007/008353
(87) Internationale Veröffentlichungsnummer: WO 2008/040475

(56) Entgegenhaltungen:
- DE-A1- 19 742 808
- DE-A1-102004 042 048
- US-A1- 2004 168 438

## Beschreibung

Die Erfindung betrifft eine Vorrichtung zur Gewinnung von elektrischer Energie aus Niedertemperaturwärme oder Abwärme. Anschließend wird die Wärmeenergie in elektrische Energie umgewandelt.

Laut einer Marktstudie des Fraunhofer Instituts für Umwelt-, Sicherheits- und Energietechnik (UMSICHT) vom Dezember 2005 kann vorläufig allein für Deutschland von einem technisch erschließbaren Abwärmepotenzial von in Summe 85 GWₜₕ ausgegangen werden, das sich wie folgt aufteilt:
- 6,7 GWₜₕ als industrielle Abwärme,
- ca. 1 GWₜₕ bei KWK-Anlagen,
- 63 GWₜₕ im Rahmen der hydrothermalen Geothermie (Tiefen von 1.500 - 3.000 m) sowie
- 14 GWₜₕ im Rahmen eines weiteren Ausbaus solarthermischer Anlagen.

Aus diesen Abwärmequellen könnte unter Annahme eines realen elektrischen Wirkungsgrades im Bereich von 6 - 10 % eine elektrische Leistung im Bereich von 5 - 8,5 GWₑₗ bei Einsatz geeigneter Wärme-Kraft-Prozesse gewonnen werden (www.presseportal.de/story_rss.htx?nr=763828).

Ein enormes Potential an Niedertemperaturwärme bleibt zur Zeit mangels geeigneter Energiekonverter ungenutzt.

Es wurde bereits eine Einrichtung zur Umwandlung von Niedertemperaturwärme in elektrische Energie bekannt, bestehend aus mindestens zwei hermetisch verschließbaren Druckbehältern, die durch Leitung verbunden sind, wobei durch Mittel zur Wärmezufuhr zum einen Behälter und zur Kühlung des anderen Behälters, welche in Form von in den Behälterinnenräumen angeordneten Wärmetauschern mit druckdicht nach außen zugeführten Zu- und Ableitungen ausgebildet sind (EP 0943789).

Nachteil dieses Vorschlags ist es, dass die technische Ausführung ungünstig und für eine wirtschaftliche Nutzung weitgehend unvorteilhaft ist, da durch die Anordnung der Wärmetauscher in den Druckbehältern die mögliche Leistung einer solchen Einrichtung stark eingeschränkt wird. Zusätzlich geht durch das Einbringen der Wärmetauscher in die Druckbehälter dem Prozess Arbeitsvolumen verloren.

Da konventionelle am Markt erhältliche Gasdruckarbeitsmaschinen einen sehr hohen Volumenstrom benötigen, führt dieser Vorschlag zu unwirtschaftlichen Baugrößen.

Der Erfindung liegt deshalb die Aufgabe zugrunde, eine Vorrichtung vorzuschlagen, mit der verfügbare Wärmeenergie auf relativ niedrigem Temperaturniveau bei wirtschaftlich hohem Wirkungsgrad in elektrische Energie umgewandelt wird.

Erfindungsgemäß wird die Aufgabe dadurch gelöst, dass in zwei als Druckbe-hälter ausgeführte Wärmetauscher, die über Leitungen mit einer in einem Druckbehälter eingebauten Gasdruckarbeitsmaschine verbunden sind, Prozessgas auf einem absolut hohen Druck verdichtet wird.

Anschließend wird gleichzeitig dem einen Wärmetauscher über ein flüssiges oder gasförmiges Medium Wärme und dem anderen Kälte über einen jeweiligen Strömungskanal zugeführt. Durch die entstehende Druckdifferenz strömt das Medium vom ersten Wärmetauscher über die Gasdruckarbeitsmaschine in den zweiten Wärmetauscher, wobei die Gasdruckarbeitsmaschine angetrieben wird.

Erfindungsgemäß wird ein Druck von 20 bis 200 MPa eingestellt. Vorteil der erfindungsgemäßen Lösung ist, dass die Wärmetauscher gleichzeitig als Druckgefäße genutzt werden können. Dadurch kann die vorgeschlagene Vorrichtung kompakt ausgebildet werden und ist auch für Kleinanwendungen geeignet.

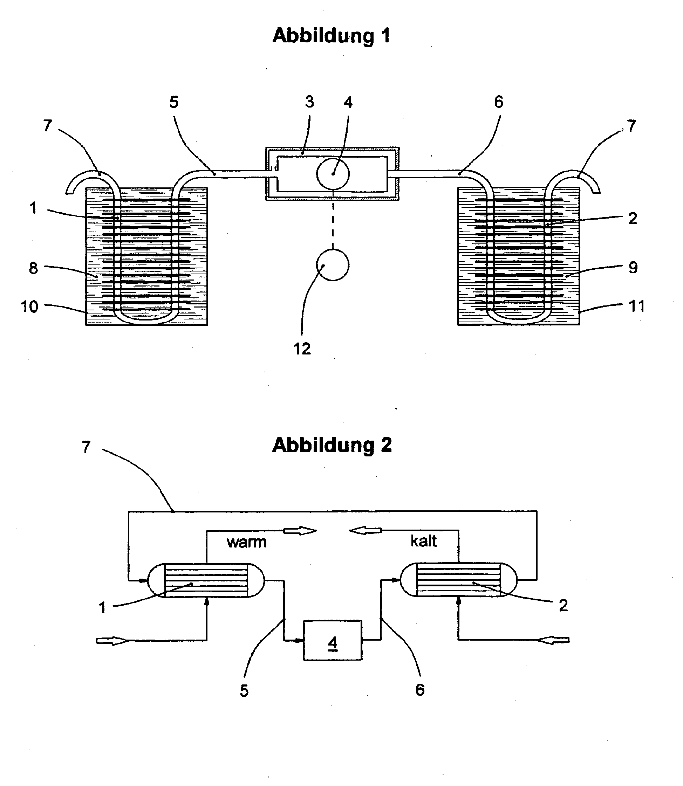

Nachfolgend soll die Erfindung an einem Ausführungsbeispiel erläutert werden. Dazu zeigen Abb. 1 eine Seitenansicht und Abb. 2 ein Fließschema.

Nach Abb.1 und Abb. 2 besteht die Vorrichtung zur Gewinnung von elektrischer Energie aus Niedertemperatur oder Abwärme aus einem Wärmetauscher 1 und einem Wärmetauscher 2, die jeweils einerseits miteinander und andererseits mit einem Druckbehälter 3 verbunden sind.

Dabei ist in dem Druckbehälter 3 eine Gasdruckarbeitsmaschine 4 derart angeordnet, dass diese Gasdruckarbeitsmaschine 4 über den Druckbehälter 3 einerseits über eine Leitung 5 mit dem Wärmetauscher 1 und andererseits über eine Leitung 6 mit dem Wärmetauscher 2 verbunden ist. Da auch die Wärmetauscher 1 und Wärmetauscher 2 über eine Leitung 7 miteinander verbunden sind, bilden die Wärmetauscher 1, 2 und die in dem Druckbehälter 3 angeordnete Gasdruckarbeitsmaschine 4 einen mit einem Prozessgas gefüllten Prozessgaskreislauf aus.

Außerdem ist der Wärmetauscher 1 von einem Medium 8 und der Wärmetauscher 2 von einem Medium 9 umgeben, wozu das Medium 8 in einem Strömungskanal 10 und das Medium 9 in einem Strömungskanal 11 geführt sind, sowie der Wärmetauscher 1 in dem Strömungskanal 10 und der Wärmetauscher 2 in dem Strömungskanal 11 angeordnet sind.

Die Gasdruckarbeitsmaschine 4 ist mechanisch mit einem Generator 12 verbunden, so dass eine in der Gasdruckarbeitsmaschine 4 erzeugte Bewegungsenergie im Generator 12 in elektrische Energie umwandelbar ist.

Das in der Gasdruckarbeitsmaschine 4 befindliche Prozessgas weist einen Druck zwischen 20 und 200 MPa, vorzugsweise zwischen 20 - 50 MPa auf. Als Prozessgase kommen Kohlendioxid, Luft oder Edelgase, insbesondere Helium und/oder andere Edelgase, in Betracht.

Das Medium 8 ist wärmer als das Medium 9, so dass zwischen Medium 8 und Medium 9 eine Temperaturdifferenz vorliegt. Dazu weisen das Medium 8 eine Temperatur zwischen 20°C und 400°C und das Medium 9 eine Temperatur zwischen -50°C und 50°C auf.

In dem Strömungskanal 7 befindet sich das warme Medium 8 und in dem Strömungskanal 11 befindet sich das kalte Medium 9. Über den Wärmetauscher 1 wird das im Wärmetauscher 1 befindliche Prozessgas erwärmt, wobei das Prozessgas einen Druck von 50 MPa aufweist.

Durch den Temperaturunterschied des Prozessgases im Wärmetauscher 1 und Wärmetauscher 2 strömt das erwärmte Prozessgas durch einen aus dem Temperaturunterschied resultierenden Druckunterschied durch die Gasdruckarbeitsmaschine 4 in den Wärmetauscher 2, wobei es in der Gasdruckarbeitsmaschine 4 eine Arbeit verrichtet und dabei den Generator 12 zur Erzeugung elektrischer Energie antreibt.

Im Wärmetauscher 2 wird das Prozessgas durch das kalte Medium 9 abgekühlt und strömt als kaltes Prozessgas aus dem Wärmetauscher 2 direkt in den Wärmetauscher 1. Im Wärmetauscher 1 wird das Prozessgas wieder durch das warme Medium 8 erwärmt und der Prozesskreislauf beginnt von neuem.

Sowohl das warme Medium 8 als auch das kalte Medium 9 können ruhende oder strömende Medien sein. Als ruhendes Medium kommen z. B. Seen und als strömendes Medium z. B. Flüsse oder Grundwasserströmungen in Betracht. Denkbar ist es aber auch, jedes andere geeignete Medium als warmes Medium 8 und/oder als kaltes Medium 9 einzusetzen.

Da der durch die Wärmetauscher 1, 2 und die in dem Druckbehälter 3 angeordnete Gasdruckarbeitsmaschine 4 ausgebildete und mit dem Prozessgas gefüllte Prozessgaskreislauf ein geschlossener Kreislauf ist, ist eine Befüllung dieses Prozessgaskreislaufes nur einmal erforderlich. Es ist aber auch denkbar, den Prozessgaskreislauf z.B. am Druckbehälter 3 mit einem Befüllungsventil oder Befüllungsstutzen zum Befüllen des Prozessgaskreislaufes auszurüsten.

### Aufstellung der verwendeten Bezugszeichen

- 1: Wärmetauscher
- 2: Wärmetauscher
- 3: Druckbehälter
- 4: Gasdruckarbeitsmaschine
- 5: Leitung
- 6: Leitung
- 7: Leitung
- 8: Medium
- 9: Medium
- 10: Strömungskanal
- 11: Strömungskanal
- 12: Generator

## Patentansprüche

1. Vorrichtung zur Gewinnung von elektrischer Energie aus Niedertemperaturwärme oder Abwärme, bestehend aus einem ersten, in einem Strömungskanal (10) angeordneten Wärmetauscher (1), einem zweiten, in einem Strömungskanal (11) angeordneten Wärmetauscher (2), und einer Gasdruckarbeitsmaschine (4), wobei die Gasdruckarbeitsmaschine (4) einerseits mit dem Wärmetauscher (1) und andererseits mit dem Wärmetauscher (2) verbunden ist,
**dadurch gekennzeichnet, dass** die Gasdruckarbeitsmaschine (4) in einem Druckbehälter (3) eingebaut ist.

2. Vorrichtung nach Anspruch 1,
**dadurch gekennzeichnet, dass** sich im Strömungskanal (10) ein Medium (8) und im Strömungskanal (11) ein Medium (9) befinden, so dass der erste Wärmetauscher (1) äußerlich durch das Medium (8) und der zweite Wärmetauscher (2) äußerlich durch das Medium (9) umgeben ist.

3. Vorrichtung nach einem der vorhergehenden Ansprüche,
**dadurch gekennzeichnet, dass** das Medium (8) warm und das Medium (9) kalt sind.

4. Vorrichtung nach einem der vorhergehenden Ansprüche,
**dadurch gekennzeichnet, dass** sich in den Wärmetauschern (1, 2) und in der Gasdruckarbeitsmaschine (4) ein Prozessgas mit einem Druck von 20 - 200 MPa befindet.

5. Verfahren zur Verwendung der Vorrichtung nach einem der vorhergehenden Ansprüche zur Gewinnung von elektrischer Energie aus Niedertemperaturwärme oder Abwärme, bei dem in einem Strömungskanal (10) ein erster Wärmetauscher (1) und in einem Strömungskanal (11) ein zweiter Wärmetauscher (2) angeordnet sind, wobei die Wärmetauscher (1, 2) über eine in einem Druckbehälter (3) eingebaute Gasdruckarbeitsmaschine (4) miteinander verbunden sind,
**dadurch gekennzeichnet, dass**
- in dem Strömungskanal (10) sich ein warmes Medium (8) und in dem Strömungskanal (11) ein kaltes Medium (9) befinden,
- das Prozessgas in die Wärmetauscher (1, 2) und in die Gasdruckarbeitsmaschine (4) mit einem Druck von 20 - 200 MPa, vorzugsweise zwischen 20 - 50 MPa, eingeleitet wird und anschließend sowohl Wärme aus dem Medium (8) über den Strömungskanal (10) in den ersten Wärmetauscher (1) als auch Kälte aus dem Medium (9) über den Strömungskanal (11) in den zweiten Wärmetauscher (2) eingeleitet werden.

## Claims

1. Apparatus for obtaining electrical energy from low-temperature heat or exhaust heat, consisting of a first heat exchanger (1), arranged in a flow channel (10), a second heat exchanger (2), arranged in a flow channel (11), and a gas pressure working machine (4), the gas pressure working machine (4) being connected on one side to the heat exchanger (1) and on the other side to the heat exchanger (2), **characterized in that** the gas pressure working machine (4) is installed in a pressure vessel (3).

2. Apparatus according to Claim 1, **characterized in that** in the flow channel (10) there is a medium (8) and in the flow channel (11) there is a medium (9), so that the first heat exchanger (1) is externally surrounded by the medium (8) and the second heat exchanger (2) is externally surrounded by the medium (9).

3. Apparatus according to one of the preceding claims, **characterized in that** the medium (8) is warm and the medium (9) is cold.

4. Apparatus according to one of the preceding claims, **characterized in that** in the heat exchangers (1, 2) and in the gas pressure working machine (4) there is a process gas at a pressure of 20 - 200 MPa.

5. Method for using the apparatus according to one of the preceding claims for obtaining electrical energy from low-temperature heat or exhaust heat, in which a first heat exchanger (1) is arranged in a flow channel (10) and a second heat exchanger (2) is arranged in a flow channel (11), the heat exchangers (1, 2) being connected to one another by way of a gas pressure working machine (4) installed in a pressure vessel (3), **characterized in that**
- in the flow channel (10) there is a warm medium (8) and in the flow channel (11) there is a cold medium (9),
- the process gas is introduced into the heat exchangers (1, 2) and into the gas pressure working machine (4) at a pressure of 20 - 200 MPa, preferably between 20 and 50 MPa, and subsequently heat from the medium (8) is introduced via the flow channel (10) into the first heat exchanger (1) and cold from the medium (9) is introduced via the flow channel (11) into the second heat exchanger (2).

## Revendications

1. Dispositif de production d'énergie électrique à partir d'une chaleur à faible température ou d'une chaleur dissipée, comprenant un premier échangeur de chaleur (1) logé dans un canal d'écoulement (10), un second échangeur de chaleur (2) logé dans un canal d'écoulement (11), et une machine de travail (4) à pression gazeuse, ladite machine de travail (4) à pression gazeuse étant raccordée à l'échangeur de chaleur (1), d'une part, et à l'échangeur de chaleur (2) d'autre part,
**caractérisé par le fait que** la machine de travail (4) à pression gazeuse est intégrée dans un réservoir de pression (3).

2. Dispositif selon la revendication 1,
**caractérisé par le fait que** le canal d'écoulement (10) renferme un fluide (8) et le canal d'écoulement (11) renferme un fluide (9), de sorte que le premier échangeur de chaleur (1) est entouré extérieurement par ledit fluide (8), et que le second échangeur de chaleur (2) est entouré extérieurement par ledit fluide (9).

3. Dispositif selon l'une des revendications précédentes,
**caractérisé par le fait que** le fluide (8) est chaud, et le fluide (9) est froid.

4. Dispositif selon l'une des revendications précédentes,
**caractérisé par le fait qu'**un gaz de procédé, présentant une pression de 20 - 200 MPa, se trouve dans les échangeurs de chaleur (1, 2) et dans la machine de travail (4) à pression gazeuse.

5. Procédé d'utilisation du dispositif selon l'une des revendications précédentes, dévolu à la production d'énergie électrique à partir d'une chaleur à faible température ou d'une chaleur dissipée, dans lequel un premier échangeur de chaleur (1) est logé dans un canal d'écoulement (10) et un second échangeur de chaleur (2) est logé dans un canal d'écoulement (11), lesdits échangeurs de chaleur (1, 2) étant raccordés l'un à l'autre par l'intermédiaire d'une machine de travail (4) à pression gazeuse, intégrée dans un réservoir de pression (3),
**caractérisé par le fait**
- **qu'**un fluide chaud (8) se trouve dans le canal d'écoulement (10), et un fluide froid (9) se trouve dans le canal d'écoulement (11),
- **que** le gaz de procédé est introduit dans les échangeurs de chaleur (1, 2) et dans la machine de travail (4) à pression gazeuse sous une pression de 20 - 200 MPa, de préférence comprise entre 20 et 50 MPa, puis de la chaleur émanant du fluide (8) est introduite dans le premier échangeur de chaleur (1) en empruntant le canal d'écoulement (10), de même que du froid émanant du fluide (9) est introduit dans le second échangeur de chaleur (2) en empruntant le canal d'écoulement (11).
